(19) **Europäisches Patentamt**
**European Patent Office**
**Office européen des brevets**

(11) **EP 3 204 433 B1**

(12) **EUROPEAN PATENT SPECIFICATION**

(45) Date of publication and mention
of the grant of the patent:
**26.01.2022 Bulletin 2022/04**

(21) Application number: **15774608.2**

(22) Date of filing: **02.10.2015**

(51) International Patent Classification (IPC):
**C08F 10/06** $^{(2006.01)}$ **C08J 3/00** $^{(2006.01)}$
**C08K 5/00** $^{(2006.01)}$

(52) Cooperative Patent Classification (CPC):
(C-Sets available)
**C08K 5/0083; C08J 5/18; C08L 23/142;**
C08J 2323/10; C08L 2203/16; C08L 2205/025;
C08L 2205/24 (Cont.)

(86) International application number:
**PCT/EP2015/072767**

(87) International publication number:
**WO 2016/055361 (14.04.2016 Gazette 2016/15)**

(54) **PROCESS FOR THE PREPARATION OF AN ALPHA-NUCLEATED POLYPROPYLENE**

VERFAHREN ZUR HERSTELLUNG VON ALPHA-NUKLEIERTEM POLYPROPYLEN

PROCÉDÉ POUR LA PRÉPARATION D'UN POLYPROPYLÈNE NUCLÉÉ ALPHA

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.10.2014 EP 14187853**

(43) Date of publication of application:
**16.08.2017 Bulletin 2017/33**

(73) Proprietor: **Borealis AG**
**1220 Vienna (AT)**

(72) Inventors:
• **WANG, Jingbo**
**4209 Engerwitzdorf (AT)**
• **MILEVA, Daniela**
**4030 Pichling (AT)**
• **DOSHEV, Petar**
**A-4040 Linz (AT)**
• **GAHLEITNER, Markus**
**A-4501 Neuhofen/Krems (AT)**

(74) Representative: **Maiwald Patent- und
Rechtsanwaltsgesellschaft mbH
Elisenhof
Elisenstraße 3
80335 München (DE)**

(56) References cited:
**EP-A1- 2 371 517**

**(Cont. next page)**

(52) Cooperative Patent Classification (CPC): (Cont.)

C-Sets
**C08F 210/06, C08F 2/001;**
**C08F 210/06, C08F 4/6465;**
**C08F 210/06, C08F 4/6541;**
**C08K 5/0083, C08L 23/10;**
**C08L 23/142;**
C08F 210/06, C08F 210/16, C08F 2500/12,
C08F 2500/20

## Description

The present invention presents a new method for preparation of $\alpha$-nucleated polypropylene compositions based on polymeric nucleating agents and very high cooling rates, further the $\alpha$-nucleated crystalline polypropylene based on polymeric nucleating agents derived thereof and its use in final articles derivable thereof.

## Description of the prior art:

Nucleated Polypropylene compositions are known in the art. The European patent application EP 1 514 893 A1 , for example, discloses polypropylene compositions comprising a clarifier selected from one or more phosphate-based $\alpha$-nucleating agents and/or polymeric nucleating agents, selected from the group consisting of vinylcycloalkane polymers and vinylalkane polymers. Similar nucleating agents are also disclosed in the international applications WO 99/24478 and WO 99/24479.

The European patent application EP 0 316 187 A2 discloses a crystalline polypropylene homopolymer incorporated therein a polymer of a vinyl cycloalkane.

The international application WO 2004/055101 discloses a heterophasic propylene copolymer, containing nucleating agents, selected from phosphate-derived nucleating agents, sorbitol-derived nucleating agents, metal salts of aromatic or aliphatic carboxylic acids as nucleating agents, polymeric nucleating agents, such as polyvinyl cyclohexane and inorganic nucleating agents, such as talc. The European application EP2371517A1 discloses nucleated polypropylene compositions which are produced by a process using high cooling rates to produce films or thin walled articles.

It is known in the art that nucleating agents, regardless of their chemical composition or way of incorporation into the polymer influence the crystallization behavior and crystallization temperature of the polymer to various extends.

This is especially true and well documented with standardized, low to medium cooling rates, e.g. 10 K/min (= 0,16 K/s) up to cooling rates of about 240 K/min (4 K/s) as they are common in standard polymer conversion techniques, like e.g. pipe extrusion, blown film extrusion or injection moulding.

However, industrial polymer conversion processes involving high to very high cooling rates, i.e. higher than the cooling rates mentioned above are numerous and become increasingly important when trying to speed up or scale up existing conversion lines. The principle problem is a combination of increased line speed and output of an existing setup with the need to cover the temperature difference between the melt temperature of 200-280°C and the final article temperature of ~ 23°C. Extrusion processes for the formation of films, sheets or coatings are potentially critical here, including several variations of the cast film process like the steel belt and water bath technology, furthermore including the water-quenched blown film technology, the wire coating process for forming cable insulations of low thickness, the metal sheet or film coating process and some fibre spinning processes. Common to these processes is, next to the high line speed of at least 100 m/min but up to 2000 m/min, the formation of thin layers or structures which allow a rapid removal of heat, resulting in the aforementioned high cooling rate.

A suitable general reference for the conversion processes involving high to very high cooling rates explained in detail hereinafter is the book "Plastics Extrusion Technology" by F. Hensen (Ed.), 2nd edition, Hanser Publishers, Munich 1997. All page numbers in the following paragraph refer to this book. In the cast film process (p. 161-186), the polymer melt having a temperature in the range of 200-260°C emerging from a flat film die is cast and drawn onto a normally chrome plated, highly polished or matt finish chill roll having a surface temperature in the range of 15-50°C. In case of the production of thin films like in the range of 20-100 $\mu$m cooling rates of 50-600 K/s can be reached.

The thickness range accessible at these or even higher rates can be further expanded by using water bath technology (p. 216) where the chill roll is partly immersed into a bath of cold water additionally cooling the other side of the film, or steel belt technology (also called "sleeve touch technology") where the water bath is replaced by a steel belt cooled from the backside.

The water-quenched blown film technology is combining a standard blown film setup (p. 101-135) having a ring-shaped die for generating a melt tube which is then inflated into a bubble with a water ring cooling setup to quench the film.

In wire coating for producing data cable or low voltage cable insulation (p. 95-98) polymer melt from an annular die is cast and drawn onto a centrally located, pre-heated wire resp. conductor, followed by cooling in a water bath and an air cooling stretch, reaching cooling rates of 100-700 K/s locally depending on configuration and line speed.

The metal sheet or film coating process (p.223-279) is similar to the cast film process in its first step, however with the addition of a metal substrate onto which the polymer melt is deposed and the presence of at least one further nip roll in for counter-cooling the polymer layer and stabilizing the thickness.

In fibre spinning processes (p.505-542) melt fibrils are generated by a multi-orifice die and stretched by means of rolls and/or air jets to form the final fibers.

It is well known among the skilled persons, that very high cooling rates have a clear negative and detrimental effect on the crystallisation behaviour and crystallisation temperature of nucleated and non-nucleated polypropylene.

It is further known, that very high cooling rates (i.e. 100 K/sec or above) suppress the crystallisation of the stable monoclinic phase of polypropylene. Instead polypropylene solidifies only in its less stable mesomorphic phase.

Cooling rates higher than 100 K/s lead to a decrease of the crystallization temperature of the monoclinic $\alpha$-structure from about 120 to 70 °C respectively. At rates above 90 K/s a second exothermic event at a lower temperature of about 30 °C is observed. The low temperature exothermic event is related to the formation of a second ordered phase, the mesomorphic phase. Further increase of cooling rate to above about 300 K/s completely suppresses the crystallization of monoclinic $\alpha$-structure and revealed only the formation of mesomorphic phase. The suppression of the monoclinic phase formation at high cooling rates results in decrease of the crystallinity of the polypropylene from 50-60 % to 20-30 %. This effect is known as "Quenching".

It is further well known and documented, that the above mentioned quenching takes place regardless if the polypropylene comprises nucleating agents like Bis-(3,4-dimethylbenzylidene)sorbitol or not:

De Santis, F.; Adamovsky, S.; Titomanlio, G.; Schick, C. Scanning nanocalorimetry at high cooling rate of isotactic polypropylene. Macromolecules 39, 2562-2567 (2006).

S. Piccarolo. Morphological changes in isotactic polypropylene as a function of cooling rate. J. Macromol. Sci., Phys. B31, 501-505 (1992).

S. Piccarolo, S. Alessi, V. Brucato, G. Titomanlio. Crystallization behaviour at high cooling rates of two polypropylenes. In: Dosier M (Editor) Crystallization of polymers. Dordrecht: Kluwer, 475-480 (1993).

K. Resch, G. Wallner, C. Teihcert, G. Maeir, M. Gahleitner. Optical properties of highly transparent polypropylene cast films: Influence of material structure, additives and processing conditions. Polymer Engineering and Science 520-531, 46 (2006).

T. Meijer-Vissers, H. Goossens: The Influence of the Cooling Rate on the Nucleation Efficiency of Isotactic Poly(propylene) with Bis(3,4-dimethylbenzylidene)sorbitol; Macromol. Symp. 2013, 330, 150-165 DOI: 10.1002

It is further well known in the art, that pronounced (or exclusive) presence of the mesomorphic phase, as it may be generated in final articles undergoing extremely high cooling rates of e.g. 100 K/s or higher as mentioned above has significant disadvantages:

Polypropylene in its mesomorphic phase has lower mechanical properties in view of stiffness than polypropylene in its monoclinic phase.

Zia, Q.; Radusch, H.J.; Androsch, R. Deformation behaviour of isotactic polypropylene crystallized via a mesophase, Polym. Bull. 63, 755-771 (2009).

Polypropylene in its mesomorphic structure is prone to increased post-process shrinkage. Such post process shrinkage may further have a detrimental and undesired effect on the properties of said final articles in view of dimensional stability, internal stress, etc.

It is further known, that the mesomorphic phase is a metastable structure and it can be converted into the stable monoclinc phase on elevated temperatures or by aging at temperatures above 60 - 70 °C. However, such late-formed re-crystallised monoclinic phases show clearly reduced degree of crystallinity (Xcr) and consequently lower level of mechanical properties compared to polypropylene, which crystallises in monoclinic phase right from the beginning without recrystallization.

Such recrystallization effects are also highly undesired, as the concerned articles may undergo e.g. dimensional changes caused by differences in the shrinking behaviour between mesomorph and monoclinic phases. They also might show unsatisfying behaviour in their final application due to increased internal stress, caused by the recrystallization.

There is hence a constant need to provide polypropylene, which reliably crystallizes in its stable monoclinc phase regardless of the cooling rate applied during conversion processes. Such polypropylene compositions shall show a higher solidification temperature (Ts) at high cooling rates (Ts$_{CR}$).

It is hereby stated, the term Ts$_{CR}$ defines the Solidification Temperature at a given cooling rate CR; eg. Ts$_{400}$ defines the solidification temperature at a cooling rate of 400 K/sec.

In addition to that it is also desired, that polypropylene not only crystallises in its monoclinic phase at high cooling rates, but also crystallizes fast. So the polypropylene shall - even at high cooling rates - have a high quenching resistance at high cooling rates.

The quenching resistance in general can be described with a phenomenological dimensionless parameter "REact", often related to activation energy, Eact herein also, referred to as "DSC-RE-act".

For better characterisation the quenching resistance at high cooling rates, we hereby introduce the term "FSC-RE-act" which defines the activation energy required by the nucleated polypropylene composition to crystallize in the monoclinic form, when exposed to high cooling rates.

FSC(100-300)-Re-act is determined at cooling rates of 100 K/s, 200 K/s and 300 K/s.

FSC (400-1000)-Re-act is determined at cooling rates of 400 K/s, 500 K/s, 800 K/s and 1000 K/s.

Especially for film application, highly transparent films are sought. In these applications high transparency is especially required and desired after sterilisation or pasteurisation.

It is further known, that transparency in films is normally linked with less crystalline structures, causing lower levels of mechanical performance (e.g. lower modulus).

However, it is desirable to create films which both have high mechanical level as well as good transparency.

**Object of the invention**

Therefore, it is necessary to find a new way for generating high amounts of monoclinic phases, i.e. alpha crystallinity in the nucleated polypropylene especially after extreme cooling at high cooling rates.

Alternatively it is desired to find a way for increasing the Solidification Temperature $Ts_{CR}$ at cooling rates of 100 K/s or above.

Higher crystallisation temperature is an essential requirement for polymers to crystallise in the stable monoclinic crystalline phase.

Seen from another point of view, there is a need to identify a process, which yields $\alpha$-nucleated polypropylene compositions having a high quenching resistance at high cooling rates.

This stable monoclinic crystalline phase, regardless of the cooling rate, is consequently essential to improve mechanical and especially thermo-mechanical properties of said final articles, in the sense of better/higher mechanical properties, esp. higher stiffness, low shrinkage, better dimension stability (with or without external stress) and improved resistance to deformation during the life time of the respective articles, especially when exposed to elevated temperatures.

So the present inventors have sought for a process how to increase the Solidification Temperature $Ts_{CR}$ of nucleated polypropylene compositions after cooling at high cooling rates, e.g. above 200 K/sec.

The present inventors have surprisingly identified a

Process for the preparation of an $\alpha$-nucleated polypropylene composition, comprising the steps of

a) forming a polypropylene composition comprising a polymeric nucleating agent, said polypropylene composition having a melt flow rate $MFR_2$ measured in accordance with ISO 1133 (230 °C, 2.16 kg) in the range of 0.1 to 500 g/10 min, a pentad regularity determined by $^{13}C$-NMR spectroscopy of at least 95.0 mol-%, a solidification temperature $TS_{400}$ of at least 50 °C and a heat of crystallization (Hc) at a cooling rate of 200 K/s of at least 30 J/g,
b) heating the polypropylene composition obtained in step a) to a melt temperature of at least 200 °C
c) exposing the melt obtained in step b) to a cooling rate of 200 K/sec or more

In a special embodiment, the invention deals with $\alpha$-nucleated polypropylene compositions, prepared according to the process of the invention, wherein the $\alpha$-nucleated polypropylene fulfils any of the requirements of having either

i) a solidification temperature $Ts_{CR}$ of 40°C or above , wherein CR is in the range of 200 K/sec up to 1000 K/sec.

In a further special embodiment the invention provides the use of $\alpha$-nucleated polypropylene compositions having either increased solidification temperature as mentioned above for extruded articles, such as films, coatings, fibres, woven or non-woven applications.

In a special embodiment the invention deals with final articles wherein the articles comprise $\alpha$-nucleated polypropylene having either increased solidification temperature as mentioned above, like extruded articles, as e.g. films or coatings, fibrous articles like fibers, filaments, non-wovens, or the like comprising this nucleated polypropylene composition.

In a special embodiment the invention deals with a method for producing extruded articles at high cooling rates, e.g in extrusion process, like cast film production, water-quenched blown film, or steel belt technology (also called "sleeve touch technology", metal sheet or film coating process, wherein the extruded articles comprise $\alpha$-nucleated polypropylene.

The $\alpha$-nucleated polypropylene composition according this invention provides several advantages in view of improved thermo-mechanical behaviour of final articles, in the sense of better/higher mechanical properties when exposed to elevated temperatures.

Further advantages of the articles produced according the actual process and comprising the $\alpha$-nucleated polypropylene of this invention are e.g. reduced elongation at elevated temperatures, improved dimension stability (low shrinkage) during the life time of the respective articles, reduced creep and better (i.e. lower) sagging behaviour.

The present invention also presents a process how to provide a nucleated polypropylene composition and articles produced thereof, which show much more pronounced dimensional stability or improved optical properties like clarity, transparency or haze, esp. when being exposed to higher temperatures, as this may occur with e.g. sterilisation or pasteurisation processes.

The present invention presents also a process how to provide an α-nucleated polypropylene composition and articles produced thereof, which show an increased crystallinity, when being exposed to higher temperatures, as this may occur with e.g. sterilisation or pasteurisation processes.

**Detailed description:**

In the following the invention is described in more detail.

**Polymer settings**

The nucleated polypropylene composition in accordance with the present invention comprises at least one propylene homopolymer component or a polypropylene-random copolymer. The modality with respect to molecular weight distribution and thus with respect to melt flow ratio is not critical.

Thus the polypropylene composition in accordance with the present invention may be unimodal or multimodal including bimodal with respect to molecular weight distribution.

According to the present invention the expression "propylene homopolymer" relates to a polypropylene that consists substantially, i.e. of at least 99.0 wt%, more preferably of at least 99.5 wt%, still more preferably of at least 99.8 wt%, like of at least 99.9 wt%, of propylene units. In another embodiment only propylene units are detectable, i.e. only propylene has been polymerised.

The α-nucleated polypropylene composition described in this invention may comprise apart from propylene also a comonomer. In this case the term "a-nucleated polypropylene composition" according to this invention is preferably understood as a polypropylene comprising preferably propylene and a comonomer being selected from ethylene and C4 to C10 α-olefins, like butene or hexene. Preferably, the comonomer is ethylene.

The total comonomer content of the nucleated propylene composition may be in the range of 0,3 to 15 wt.%, preferably in the range of 0,5 5 to 12 wt.%, like in the range of 1 to 11 wt.%. In a preferred embodiment the α-nucleated polypropylene composition according to the present invention consists of propylene as sole monomer, forming an α-nucleated polypropylene-homopolymer

The nucleated polypropylene composition in accordance with the present invention has a melt flow rate ($MFR_2$) as measured in accordance with ISO 1133 at 230°C and 2.16 kg load in the range of 0.1 to 500 g/10min, preferably in the range of 0.3 to 250 g/10min, like in the range of 0.4 to 100 g/10min. Even more preferably the $MFR_2$ is in the range of 0,7 - 50 g/10 min, like 1 - 30 g/10 min.

The propylene homopolymer fractions of the polypropylene composition in accordance with the present invention are predominantly isotactic. In particular, the pentad regularity as determined by $^{13}$C-NMR spectroscopy is at least 95.0 mol%, preferably at least 96.0 mol%, more preferably at least 97.0 mol%, e.g. at least 98 mol%.

The nucleated polypropylene composition in accordance with the present invention has a Solidification Temperature $Ts_{400}$ of at least 50 °C, such as at least 52°C or at least 55 °C optionally a $Ts_{500}$ of at least 45 °C, such as 47°C or 49°C or 52°C.

In case the nucleated polypropylene composition in accordance with the present invention is a homopolymer, it preferably has a DSC-RE-act parameter of at least 4800, such as at least 5000, preferably at least 5150, such as at least 5200.

In case the nucleated polypropylene composition in accordance with the present invention is a copolymer, e.g. a polypropylene-ethylene-random-copolymer, it preferably has a DSC-RE-act parameter of at least 4000, such as 4200 or 4400.

The nucleated polypropylene composition in accordance with the present invention has preferably a FSC (400-1000)-RE-act parameter o at least 50, like e.g.100, preferably of at least 150, like 200, more preferably of at least 240, like e.g. 260 or 270.

The nucleated polypropylene composition in accordance with the present invention has a Heat of crystallization (Hc) at a cooling rate of 200 K/s of at least 30 J/g, preferably at least 35 J/g.

The nucleated propylene composition in accordance with the present invention preferably has a heat of crystallization (Hc) at a cooling rate of

300 K/s of at least 20 J/g, preferably 22 or
400 K/s of at least 12 J/g, or
500 K/s of at least 6 J/g, or
800 K/s of at least 5J/g, or
1000 K/s of at least 5 J/g, or

2000 K/s of at least 5 J/g.

It is especially preferred if the α-nucleated polypropylene compositions, produced according the present invention fulfils any of the conditions of either i) solidification temperature $Ts_{2000}$ of 30°C or above , or ii) FSC(400-1000)-REact of at least 200.
It is especially preferred if the α-nucleated polypropylene compositions, produced according the present invention fulfils either conditions:

  i) and ii) or
  i) and iii) or
  i) and ii).

It is very especially preferred, if the α-nucleated polypropylene compositions, produced according the present invention fulfils all three conditions i), ii) and iii) as cited above.
It is further preferred, if the α-nucleated polypropylene compositions, produced according the present invention fulfils either condition if i), ii) or iii) combined with any of the conditions for Heat of crystallisation as mentioned above.

**Polymeric nucleating agent**

The nucleated polypropylene composition in accordance with the present invention is furthermore characterized in that it comprises a polymeric nucleating agent. Any known polymeric nucleating agent may be employed including polymers of vinyl alkanes and vinyl cycloalkanes.
A preferred example of such a polymeric nucleating agent is a vinyl polymer, such as a vinyl polymer derived from monomers of the formula

### CH2 = CH-CHR1R2

wherein R1 and R2, together with the carbon atom they are attached to, form an optionally substituted saturated or unsaturated or aromatic ring or a fused ring system, wherein the ring or fused ring moiety contains four to 20 carbon atoms, preferably 5 to 12 membered saturated or unsaturated or aromatic ring or a fused ring system or independently represent a linear or branched C4-C30 alkane, C4- C20 cycloalkane or C4-C20 aromatic ring. Preferably R1 and R2, together with the C-atom wherein they are attached to, form a five- or six-membered saturated or unsaturated or aromatic ring or independently represent a lower alkyl group comprising from 1 to 4 carbon atoms. Preferred vinyl compounds for the preparation of a polymeric nucleating agent to be used in accordance with the present invention are in particular vinyl cycloalkanes, in particular vinyl cyclohexane (VCH), vinyl cyclopentane, and vinyl-2-methyl cyclohexane, 3-methyl-1-butene, 3-ethyl-1-hexene, 3-methyl-1-pentene, 4-methyl-1-pentene or mixtures thereof. VCH is a particularly preferred monomer.
Such polymeric nucleating agent can be for instance incorporated by the so called BNT-technology (i.e. inreactor nucleation) as mentioned below.
The polymeric nucleating agent introduced via in-reactor-nucleation usually is present in the final product in an amount of from at least 10 ppm, typically at least 13 ppm, (based on the weight of the polypropylene composition). Preferably this agent is present in the α-nucleated polypropylene composition in a range of from 10 to 1000 ppm, more preferably more than 15 to 500 ppm, such as 20 to 100 ppm.
Alternatively, the polymeric nucleating agent can be for instance incorporated by the so called Masterbatch technology, (compounding technology).
The use of the polymeric nucleating agent in accordance with the present invention enables the preparation of α-nucleated polypropylene compositions having highly satisfactory optical properties and satisfactory mechanical properties.
In this case the polymeric nucleating agent may present in the final product also in lower concentrations, like in an amount of from at least 0,5 ppm, typically at least 1 ppm, (based on the weight of the polypropylene composition). Preferably this agent is present in the a-nucleated polypropylene composition in a range of from 2 to 100 ppm, more preferably more than 3 to 80 ppm, such as 5 to 50 ppm.
It is possible for the compositions in accordance with the present invention to additionally contain low molecular weight nucleating agents, in particular nucleating agents like organophosphates or soluble nucleants like sorbitol- or nonitol-derived nucleating agents.
It is preferred, that the nucleated polypropylene contains solely a polymeric nucleating agent.

**Preparation Process:**

The polypropylene composition in accordance with the present invention may be prepared by any suitable process, including in particular blending processes such as mechanical blending including mixing and melt blending processes and any combinations thereof as well as in-situ blending during the polymerisation process of the propylene polymer component(s). These can be carried out by methods known to the skilled person, including batch processes and continuous processes.

It is also possible to prepare the polypropylene composition in accordance with the present invention by a single-stage polymerisation process or by a sequential polymerisation process, wherein the single components of the polypropylene composition are prepared, one after the other, in the presence of the already prepared components. Such a sequential process for preparing the polypropylene composition is preferred and yields a reactor blend (in-situ blend) or reactor made polymer composition, which means herein the reaction product obtained from a polymerisation reaction wherein, for example, the propylene components (i.e. the propylene homo polymer(s) and/or the propylene-copolymer rubber phase or phases) are polymerised in the presence of the polymeric nucleating agent.

Another embodiment, different to the above mentioned in-situ blend, is a mechanical blend of a polymer with a polymeric nucleating agent, wherein the polymer is first produced in the absence of a polymeric nucleating agent and is then blended mechanically with the polymeric nucleating agent or with a small amount of nucleated polymer or with polymers, which already contain the polymeric nucleating agent (so-called master batch technology) in order to introduce the polymeric nucleating agent into the polymer mixture. The preparation of a reactor made polymer composition ensures the preparation of a homogenous mixture of the components, for example a homogenously distributed polymeric nucleating agent in the polypropylene composition, even at high concentrations of polymeric nucleating agent.

As outlined above, the reactor made polymer composition is a preferred embodiment of the present invention, although also mechanical blends prepared, for example, by using master batch technology are envisaged by the present invention.

Similar considerations also apply with respect to the preparation of multimodal including bimodal polypropylene compositions. While such multimodal or bimodal components may also be prepared by mechanical blending processes, it is preferred in accordance with the present invention to provide such multimodal or bimodal compositions in the form of a reactor made compositions, meaning that the second (or any further) component is prepared in the presence of the first component (or any preceding components).

In a further preferred embodiment of the present invention, the polymeric nucleating agent is introduced into the polypropylene composition by means of a suitably modified catalyst, i.e. the catalyst to be used in catalysing the polymerisation of the propylene polymer is subjected to a polymerisation of a suitable monomer for the polymeric nucleating agent to produce first said polymeric nucleating agent (so called BNT-technology is mentioned below). The catalyst is then introduced together with the obtained polymeric nucleating agent to the actual polymerisation step of the propylene polymer component(s).

In a particularly preferred embodiment of the present invention, the propylene polymer is prepared in the presence of such a modified catalyst to obtain said reactor made polypropylene composition. With such modified catalyst, it is also possible to carry out the above-identified preferred polymerisation sequence for the preparation of in-situ blended multimodal, including bimodal, polypropylenes.

The polypropylene composition according to the invention is preferably prepared by a sequential polymerisation process, as described below, in the presence of a catalyst system comprising a Ziegler-Natta Catalyst (ZN-C), a cocatalyst (Co) and optionally an external donor (ED), as described below.

In the pre-polymerisation reactor (PR) a polypropylene (Pre-PP) is produced. The pre-polymerisation is conducted in the presence of the Ziegler-Natta catalyst (ZN-C). According to this embodiment the Ziegler-Natta catalyst (ZN-C), the co-catalyst (Co), and the external donor (ED) are all introduced to the pre-polymerisation step. However, this shall not exclude the option that at a later stage for instance further co-catalyst (Co) and/or external donor (ED) is added in the polymerisation process, for instance in the first reactor (R1). In one embodiment the Ziegler-Natta catalyst (ZN-C), the co-catalyst (Co), and the external donor (ED) are only added in the pre-polymerisation reactor (PR).

The pre-polymerisation reaction is typically conducted at a temperature of 0 to 60 °C, preferably from 15 to 50 °C, and more preferably from 20 to 45 °C.

The pressure in the pre-polymerisation reactor is not critical but must be sufficiently high to maintain the reaction mixture in liquid phase. Thus, the pressure may be from 20 to 100 bar, for example 30 to 70 bar.

In a preferred embodiment, the pre-polymerisation is conducted as bulk slurry polymerisation in liquid propylene, i.e. the liquid phase mainly comprises propylene, with optionally inert components dissolved therein. Furthermore, according to the present invention, an ethylene feed can be employed during pre-polymerisation as mentioned above.

It is possible to add other components also to the pre-polymerisation stage. Thus, hydrogen may be added into the pre-polymerisation stage to control the molecular weight of the polypropylene (Pre-PP) as is known in the art. Further, antistatic additive may be used to prevent the particles from adhering to each other or to the walls of the reactor.

The precise control of the pre-polymerisation conditions and reaction parameters is within the skill of the art.

Due to the above defined process conditions in the pre-polymerisation, a mixture (MI) of the Ziegler-Natta catalyst (ZN-C) and the polypropylene (Pre-PP) produced in the pre-polymerisation reactor (PR) is obtained. Preferably the Ziegler-Natta catalyst (ZN-C) is (finely) dispersed in the polypropylene (Pre-PP). In other words, the Ziegler-Natta catalyst (ZN-C) particles introduced in the pre-polymerisation reactor (PR) split into smaller fragments which are evenly distributed within the growing polypropylene (Pre-PP). The sizes of the introduced Ziegler-Natta catalyst (ZN-C) particles as well as of the obtained fragments are not of essential relevance for the instant invention and within the skilled knowledge.

**Polymerisation Process**

Accordingly, the nucleated polypropylene is preferably produced in a process comprising the following steps under the conditions set out above:

a) In the pre-polymerisation, a mixture (MI) of the Ziegler-Natta catalyst (ZN-C) and the polypropylene (Pre-PP) produced in the pre-polymerisation reactor (PR) is obtained. Preferably the Ziegler-Natta catalyst (ZN-C) is (finely) dispersed in the polypropylene (Pre-PP). Subsequent to the pre-polymerisation, the mixture (MI) of the Ziegler-Natta catalyst (ZN-C) and the polypropylene (Pre-PP) produced in the pre-polymerisation reactor (PR) is transferred to the first reactor (R1). Typically the total amount of the polypropylene (Pre-PP) in the final propylene polymer is rather low and typically not more than 5.0 wt.-%, more preferably not more than 4.0 wt.-%, still more preferably in the range of 0.5 to 4.0 wt.-%, like in the range 1.0 of to 3.0 wt.-%.

b) In the first polymerisation reactor (R1), i.e. in a loop reactor (LR), propylene is polymerised obtaining a first propylene homopolymer fraction (H-PP1) of the propylene homopolymer (H-PP), transferring said first propylene homopolymer fraction (H-PP1) to any optional further polymerisation reactors.

In any further optional reactor propylene is polymerised in the presence of any preceedingly produced polypropylene fraction

Within the invention it is envisaged, that comonomers may be applied.in any of the polymerisation reactors.

A preferred multistage process is a "loop-gas phase"-process, such as developed by Borealis A/S, Denmark (known as BORSTAR® technology) is described e.g. in patent literature, such as in EP 0 887 379, WO 92/12182 WO 2004/000899, WO 2004/111095, WO 99/24478, WO 99/24479 or in WO 00/68315.

A further suitable slurry-gas phase process is the Spheripol® process of Basell.

Within the term "a-nucleated polypropylene composition" in the meaning of the present inventions, it is understood, that the composition still may comprise the usual additives for utilization with polyolefins, such as pigments (e.g. TiO2 or carbon black), stabilizers, acid scavengers and/or UV-stabilisers, lubricants, antistatic agents, further nucleating agents and utilization agents (such as processing aid agents, adhesive promotors, compatibiliser, etc.)

The amount of such additives usually is 10 wt% or less, preferably 5 wt% or less.

**Catalyst system**

As pointed out above the catalyst for the preparation of the nucleated propylene composition as defined may be a Ziegler-Natta catalyst, in particular a high yield Ziegler-Natta catalyst (so called fourth and fifth generation type to differentiate from low yield, so called second generation Ziegler-Natta catalysts), which comprises a catalyst component, a co-catalyst component and an internal donor based on phthalate-compositions.

Examples for such catalysts are in particular disclosed in US 5 234 879, WO92/19653, WO 92/19658 and WO 99/33843, incorporated herein by reference.

However, some of such phthalate-compositions are under suspicion of generating negative health and environmental effects and will probably be banned in the future. Furthermore, there is an increasing demand on the market for "phthalate-free polypropylene" suitable for various applications, e.g. in the field of packaging and medical applications as well as personal care, or personal hygiene.

WO 2012007430 also incorporated herein by reference, is one example of a limited number of patent applications, describing phthalate free catalysts based on citraconate as internal donor.

However, within this invention it is a preferred option, that the $\alpha$-nucleated polypropylene composition according the invention is free of phthalic acid esters as well as their respective decomposition products.

A possible catalyst for being used in the production of the nucleated polypropylene composition is described herein:

The catalyst is a solid Ziegler-Natta catalyst (ZN-C), which comprises compounds (TC) of a transition metal of Group 4 to 6 of IUPAC, like titanium, a Group 2 metal compound (MC), like a magnesium, and an internal donor (ID) being a phthalate or preferably a non-phthalic compound, preferably a non-phthalic acid ester, still more preferably being a diester of non-phthalic dicarboxylic acids as described in more detail below. Thus, the catalyst is in a preferred embodiment fully free of undesired phthalic compounds. Further, the solid catalyst is free of any external support material, like silica or $MgCl_2$, but the catalyst is self-supported.

The Ziegler-Natta catalyst (ZN-C) can be further defined by the way as obtained.

Accordingly, the Ziegler-Natta catalyst (ZN-C) is preferably obtained by a process comprising the steps of

a)

$a_1$) providing a solution of at least a Group 2 metal alkoxy compound (Ax) being the reaction product of a Group 2 metal compound (MC) and a monohydric alcohol (A) comprising in addition to the hydroxyl moiety at least one ether moiety optionally in an organic liquid reaction medium; or

$a_2$) a solution of at least a Group 2 metal alkoxy compound (Ax') being the reaction product of a Group 2 metal compound (MC) and an alcohol mixture of the monohydric alcohol (A) and a monohydric alcohol (B) of formula ROH, optionally in an organic liquid reaction medium; or

$a_3$) providing a solution of a mixture of the Group 2 alkoxy compound (Ax) and a Group 2 metal alkoxy compound (Bx) being the reaction product of a Group 2 metal compound (MC) and the monohydric alcohol (B), optionally in an organic liquid reaction medium; or

$a_4$) providing a solution of Group 2 alkoxide of formula $M(OR_1)_n(OR_2)_mX_{2-n-m}$ or mixture of Group 2 alkoxides $M(OR_1)_{n'}X_{2-n'}$ and $M(OR_2)_{m'}X_{2-m'}$, where M is Group 2 metal, X is halogen, $R_1$ and $R_2$ are different alkyl groups of $C_2$ to $C_{16}$ carbon atoms, and $0 \leq n < 2$, $0 \leq m < 2$ and $n+m+(2-n-m) = 2$, provided that both n and m $\neq$ 0, $0 < n' \leq 2$ and $0 < m' \leq 2$; and

b) adding said solution from step a) to at least one compound (TC) of a transition metal of Group 4 to 6 and

c) obtaining the solid catalyst component particles, and adding an internal electron donor (ID), preferably a non-phthalic internal donor (ID), at any step prior to step c).

The internal donor (ID) or precursor thereof is thus added preferably to the solution of step a) or to the transition metal compound before adding the solution of step a).

According to the procedure above the Ziegler-Natta catalyst (ZN-C) can be obtained via precipitation method or via emulsion- solidification method depending on the physical conditions, especially temperature used in steps b) and c). Emulsion is also called in this application liquid/liquid two-phase system.

In both methods (precipitation or emulsion-solidification) the catalyst chemistry is the same.

In precipitation method combination of the solution of step a) with at least one transition metal compound (TC) in step b) is carried out and the whole reaction mixture is kept at least at 50 °C, more preferably in the temperature range of 55 to 110 °C, more preferably in the range of 70 to 100 °C, to secure full precipitation of the catalyst component in form of a solid particles (step c).

In emulsion - solidification method in step b) the solution of step a) is typically added to the at least one transition metal compound (TC) at a lower temperature, such as from -10 to below 50°C, preferably from -5 to 30°C. During agitation of the emulsion the temperature is typically kept at -10 to below 40°C, preferably from -5 to 30°C. Droplets of the dispersed phase of the emulsion form the active catalyst composition. Solidification (step c) of the droplets is suitably carried out by heating the emulsion to a temperature of 70 to 150°C, preferably to 80 to 110°C.

The catalyst prepared by emulsion - solidification method is preferably used in the present invention.

In a preferred embodiment in step a) the solution of $a_2$) or $a_3$) are used, i.e. a solution of (Ax') or a solution of a mixture of (Ax) and (Bx), especially the solution of $a_2$).

Preferably the Group 2 metal (MC) is magnesium.

The magnesium alkoxy compounds as defined above can be prepared *in situ in* the first step of the catalyst preparation process, step a), by reacting the magnesium compound with the alcohol(s) as described above, or said magnesium alkoxy compounds can be separately prepared magnesium alkoxy compounds or they can be even commercially available as ready magnesium alkoxy compounds and used as such in the catalyst preparation process of the invention.

Illustrative examples of alcohols (A) are glycol monoethers. Preferred alcohols (A) are $C_2$ to $C_4$ glycol monoethers, wherein the ether moieties comprise from 2 to 18 carbon atoms, preferably from 4 to 12 carbon atoms. Preferred examples are 2-(2-ethylhexyloxy)ethanol, 2-butyloxy ethanol, 2-hexyloxy ethanol and 1,3-propylene-glycol-monobutyl ether, 3-butoxy-2-propanol, with 2-(2-ethylhexyloxy)ethanol and 1,3-propylene-glycol-monobutyl ether, 3-butoxy-2-propanol being particularly preferred.

Illustrative monohydric alcohols (B) are of formula ROH, with R being straight-chain or branched $C_2$-$C_{16}$ alkyl residue, preferably $C_4$ to $C_{10}$, more preferably C6 to $C_8$ alkyl residue. The most preferred monohydric alcohol is 2-ethyl-1-hexanol or octanol.

Preferably a mixture of Mg alkoxy compounds (Ax) and (Bx) or mixture of alcohols (A) and (B), respectively, are used and employed in a mole ratio of Bx:Ax or B:A from 10:1 to 1:10, more preferably 6:1 to 1:6, most preferably 4.1 to 1:4.

Magnesium alkoxy compound may be a reaction product of alcohol(s), as defined above, and a magnesium compound selected from dialkyl magnesium, alkyl magnesium alkoxides, magnesium dialkoxides, alkoxy magnesium halides and alkyl magnesium halides. Further, magnesium dialkoxides, magnesium diaryloxides, magnesium aryloxyhalides, magnesium aryloxides and magnesium alkyl aryloxides can be used. Alkyl groups can be a similar or different $C_1$-$C_{20}$ alkyl, preferably $C_2$-$C_{10}$ alkyl. Typical alkyl-alkoxy magnesium compounds, when used, are ethyl magnesium butoxide, butyl magnesium pentoxide, octyl magnesium butoxide and octyl magnesium octoxide. Preferably the dialkyl magnesium are used. Most preferred dialkyl magnesium are butyl octyl magnesium or butyl ethyl magnesium.

It is also possible that magnesium compound can react in addition to the alcohol (A) and alcohol (B) also with a polyhydric alcohol (C) of formula R"$(OH)_m$ to obtain said magnesium alkoxide compounds. Preferred polyhydric alcohols, if used, are alcohols, wherein R" is a straight-chain, cyclic or branched $C_2$ to $C_{10}$ hydrocarbon residue, and m is an integer of 2 to 6.

The magnesium alkoxy compounds of step a) are thus selected from the group consisting of magnesium dialkoxides, diaryloxy magnesium, alkyloxy magnesium halides, aryloxy magnesium halides, alkyl magnesium alkoxides, aryl magnesium alkoxides and alkyl magnesium aryloxides. In addition a mixture of magnesium dihalide and a magnesium dialkoxide can be used.

The solvents to be employed for the preparation of the present catalyst may be selected among aromatic and aliphatic straight chain, branched and cyclic hydrocarbons with 5 to 20 carbon atoms, more preferably 5 to 12 carbon atoms, or mixtures thereof. Suitable solvents include benzene, toluene, cumene, xylene, pentane, hexane, heptane, octane and nonane. Hexanes and pentanes are particular preferred.

The reaction for the preparation of the magnesium alkoxy compound may be carried out at a temperature of 40° to 70°C. Most suitable temperature is selected depending on the Mg compound and alcohol(s) used.

The transition metal compound of Group 4 to 6 is preferably a titanium compound, most preferably a titanium halide, like $TiCl_4$.

The internal donor (ID) used in the preparation of the catalyst used in the present invention is preferably selected from (di)esters of non-phthalic carboxylic (di)acids, 1,3-diethers, derivatives and mixtures thereof. Especially preferred donors are diesters of monounsaturated dicarboxylic acids, in particular esters belonging to a group comprising malonates, maleates, succinates, citraconates, glutarates, cyclohexene-1,2-dicarboxylates and benzoates, and any derivatives and/or mixtures thereof. Preferred examples are e.g. substituted maleates and citraconates, most preferably citraconates.

In emulsion method, the two phase liquid-liquid system may be formed by simple stirring and optionally adding (further) solvent(s) and additives, such as the turbulence minimizing agent (TMA) and/or the emulsifying agents and/or emulsion stabilizers, like surfactants, which are used in a manner known in the art for facilitating the formation of and/or stabilize the emulsion. Preferably, surfactants are acrylic or methacrylic polymers. Particular preferred are unbranched $C_{12}$ to $C_{20}$ (meth)acrylates such as poly(hexadecyl)-methacrylate and poly(octadecyl)-methacrylate and mixtures thereof. Turbulence minimizing agent (TMA), if used, is preferably selected from α-olefin polymers of α-olefin monomers with 6 to 20 carbon atoms, like polyoctene, polynonene, polydecene, polyundecene or polydodecene or mixtures thereof. Most preferable it is polydecene.

The solid particulate product obtained by precipitation or emulsion - solidification method may be washed at least once, preferably at least twice, most preferably at least three times with an aromatic and/or aliphatic hydrocarbons, preferably with toluene, heptane or pentane and or with $TiCl_4$. Washing solutions can also contain donors and/or compounds of Group 13, like trialkyl aluminum, halogenated alky aluminum compounds or alkoxy aluminum compounds. Aluminum compounds can also be added during the catalyst synthesis. The catalyst can further be dried, as by evaporation or flushing with nitrogen, or it can be slurried to an oily liquid without any drying step.

The finally obtained Ziegler-Natta catalyst is desirably in the form of particles having generally an average particle size range of 5 to 200 μm, preferably 10 to 100. Particles are compact with low porosity and have surface area below 20 g/m$^2$, more preferably below 10 g/m$^2$. Typically the amount of Ti is 1 to 6 wt-%, Mg 10 to 20 wt-% and donor 10 to 40 wt-% of the catalyst composition.

Detailed description of preparation of catalysts is disclosed in WO 2012/007430, EP2610271, EP 2610270 and EP2610272 which are incorporated here by reference.

The Ziegler-Natta catalyst (ZN-C) is preferably used in association with an alkyl aluminum cocatalyst and optionally external donors.

As further component in the instant polymerisation process an external donor (ED) is preferably present. Suitable external donors (ED) include certain silanes, ethers, esters, amines, ketones, heterocyclic compounds and blends of these. It is especially preferred to use a silane. It is most preferred to use silanes of the general formula

$$R^a_pR^b_qSi(OR^c)_{(4-p-q)}$$

wherein $R^a$, $R^b$ and $R^c$ denote a hydrocarbon radical, in particular an alkyl or cycloalkyl group, and wherein p and q are numbers ranging from 0 to 3 with their sum p + q being equal to or less than 3. $R^a$, $R^b$ and $R^c$ can be chosen independently from one another and can be the same or different. Specific examples of such silanes are (tert-butyl)$_2$Si(OCH$_3$)$_2$, (cyclohexyl)(methyl)Si(OCH$_3$)$^2$, (phenyl)$_2$Si(OCH$_3$)$_2$ and (cyclopentyl)$_2$Si(OCH$_3$)$_2$, or of general formula

$$Si(OCH_2CH_3)_3(NR^3R^4)$$

wherein $R^3$ and $R^4$ can be the same or different a represent a hydrocarbon group having 1 to 12 carbon atoms.

$R^3$ and $R^4$ are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 1 to 12 carbon atoms. It is in particular preferred that $R^3$ and $R^4$ are independently selected from the group consisting of methyl, ethyl, n-propyl, n-butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl.

More preferably both $R^1$ and $R^2$ are the same, yet more preferably both $R^3$ and $R^4$ are an ethyl group.

Especially preferred external donors (ED) are the pentyl dimethoxy silane donor (D-donor) or the cyclohexylmethyl dimethoxy silane donor (C-Donor).

In addition to the Ziegler-Natta catalyst (ZN-C) and the optional external donor (ED) a cocatalyst can be used. The co-catalyst is preferably a compound of group 13 of the periodic table (IUPAC), e.g. organo aluminum, such as an aluminum compound, like aluminum alkyl, aluminum halide or aluminum alkyl halide compound. Accordingly, in one specific embodiment the co-catalyst (Co) is a trialkylaluminium, like triethylaluminium (TEAL), dialkyl aluminium chloride or alkyl aluminium dichloride or mixtures thereof. In one specific embodiment the co-catalyst (Co) is triethylaluminium (TEAL).

Advantageously, the triethyl aluminium (TEAL) has a hydride content, expressed as AlH$_3$, of less than 1.0 wt% with respect to the triethyl aluminium (TEAL). More preferably, the hydride content is less than 0.5 wt%, and most preferably the hydride content is less than 0.1 wt%.

Preferably the ratio between the co-catalyst (Co) and the external donor (ED) [Co/ED] and/or the ratio between the co-catalyst (Co) and the transition metal (TM) [Co/TM] should be carefully chosen.

Accordingly,

(a) the mol-ratio of co-catalyst (Co) to external donor (ED) [Co/ED] must be in the range of 5 to 45, preferably is in the range of 5 to 35, more preferably is in the range of 5 to 25; and optionally

(b) the mol-ratio of co-catalyst (Co) to titanium compound (TC) [Co/TC] must be in the range of above 80 to 500, preferably is in the range of 100 to 350, still more preferably is in the range of 120 to 300.

As mentioned above the Ziegler-Natta catalyst (ZN-C) is preferably modified by the so called BNT-technology during the above described pre-polymerisation step in order to introduce the polymeric nucleating agent.

Such a polymeric nucleating agent is as described above a vinyl polymer, such as a vinyl polymer derived from monomers of the formula

**CH2 = CH-CHR1R2**

wherein R1 and R2, together with the carbon atom they are attached to, form an optionally substituted saturated or unsaturated or aromatic ring or a fused ring system, wherein the ring or fused ring moiety contains four to 20 carbon atoms, preferably 5 to 12 membered saturated or unsaturated or aromatic ring or a fused ring system or independently represent a linear or branched C4-C30 alkane, C4- C20 cycloalkane or C4-C20 aromatic ring. Preferably R1 and R2, together with the C-atom wherein they are attached to, form a five- or six-membered saturated or unsaturated or aromatic ring or independently represent a lower alkyl group comprising from 1 to 4 carbon atoms. Preferred vinyl compounds for the preparation of a polymeric nucleating agent to be used in accordance with the present invention are in particular vinyl cycloalkanes, in particular vinyl cyclohexane (VCH), vinyl cyclopentane, and vinyl-2-methyl cyclohexane, 3-methyl-1-butene, 3-ethyl-1-hexene, 3-methyl-1-pentene, 4-methyl-1-pentene or mixtures thereof. VCH is a particularly preferred monomer.

The weight ratio of vinyl compound to polymerisation catalyst in the modification step of the polymerisation catalyst preferably is 0.3 or more up to 40, such as 0.4 to 20 or more preferably 0.5 to 15, like 0.5 to 2.0.

The polymerisation of the vinyl compound, e. g. VCH, can be done in any inert fluid that does not dissolve the polymer formed (e. g. polyVCH). It is important to make sure that the viscosity of the final catalyst/polymerised vinyl compound/inert fluid mixture is sufficiently high to prevent the catalyst particles from settling during storage and transport.

The adjustment of the viscosity of the mixture can be done either before or after the polymerisation of the vinyl compound. It is, e. g., possible to carry out the polymerisation in a low viscosity oil and after the polymerisation of the vinyl compound the viscosity can be adjusted by addition of a highly viscous substance. Such highly viscous substance can be a "wax", such as an oil or a mixture of an oil with a solid or highly viscous substance (oilgrease). The viscosity of such a viscous substance is usually 1,000 to 15,000 cP at room temperature. The advantage of using wax is that the catalyst storing and feeding into the process is improved. Since no washing, drying, sieving and transferring are needed, the catalyst activity is maintained.

The weight ratio between the oil and the solid or highly viscous polymer is preferably less than 5: 1.

In addition to viscous substances, liquid hydrocarbons, such as isobutane, propane, pentane and hexane, can also be used as a medium in the modification step..

The polypropylenes produced with a catalyst modified with polymerised vinyl compounds contain essentially no free (unreacted) vinyl compounds. This means that the vinyl compounds shall be completely reacted in the catalyst modification step. To that end, the weight ratio of the (added) vinyl compound to the catalyst should be in the range of 0.05 to 10, preferably less than 3, more preferably about 0.1 to 2.0, and in particular about 0.1 to 1.5. It should be noted that no benefits are achieved by using vinyl compounds in excess. Further, the reaction time of the catalyst modification by polymerisation of a vinyl compound should be sufficient to allow for complete reaction of the vinyl monomer, i. e. the polymerisation is continued until the amount of unreacted vinyl compounds in the reaction mixture (including the polymerisation medium and the reactants) is less than 0.5 wt-%, in particular less than 2000 ppm by weight (shown by analysis). Thus, when the prepolymerised catalyst contains a maximum of about 0.1 wt-% vinyl compound, the final vinyl compound content in the polypropylene will be below the limit of determination using the GC-MS method ( < 0.01 ppm by weight). Generally, when operating on an industrial scale, a polymerisation time of at least 30 minutes is required, preferably the polymerisation time is at least I hour and in particular at least 5 hours. Polymerisation times even in the range of 6 to 50 hours can be used. The modification can be done at temperatures of 10 to 70 °C, preferably 35 to 65 °C.

According to the invention, nucleated high-stiffness propylene polymers are obtained when the modification of the catalyst is carried out in the presence of strongly coordinating external donors.

General conditions for the modification of the catalyst are also disclosed in WO 00/6831, incorporated herein by reference with respect to the modification of the polymerisation catalyst.

The preferred embodiments as described previously in the present application with respect to the vinyl compound also apply with respect to the polymerisation catalyst of the present invention and the preferred polypropylene composition in accordance with the present invention.

Suitable media for the modification step include, in addition to oils, also aliphatic inert organic solvents with low viscosity, such as pentane and heptane. Furthermore, small amounts of hydrogen can be used during the modification.

**Process**

The process for the preparation of an $\alpha$-nucleated polypropylene composition, comprises the steps of

    a) forming a polypropylene composition comprising a polymeric nucleating agent, said polypropylene composition having a melt flow rate $MFR_2$ measured in accordance with ISO 1133 (230 °C, 2.16 kg) in the range of 0.1 to 500 g/10 min, a pentad regularity determined by $^{13}$C-NMR spectroscopy of at least 95.0 mol-%, a solidification temperature $Ts_{400}$ of at least 50 °C and a heat of crystallization (Hc) at a cooling rate of 200 K/s of at least 30 J/g,
    b) heating the polypropylene composition obtained in step a) to a melt temperature of at least 200 °C
    c) exposing the melt obtained in step b) to a cooling rate of 200 K/sec or more

It is envisaged within the present invention, that, step b) mentioned above may comprise two parts, whereby in the 2nd part the melt may be formed into forms suitable to further form final articles.

So the process step b) may be alternatively described as

    b1) heating the polypropylene composition obtained in step a) to a melt temperature of at least 200 °C and
    b2) forming said polypropylene composition into a molten film.

It is within the scope of the invention that the polypropylene composition can comprise usual additives like phenolic antioxidants, lubricants, demoulding agents, antistatic and the like.

It may even contain further nucleating agent.

Heating of the mention polypropylene compositions can be done by any known means, or suitable devices, such as extruders, injection machines or the like.

Depending on the desired viscosity of the melt the melt temperature can be higher than 200 °C, such as 220 °C or 240°C.

The mentioned process may be used in various conversion techniques, e.g. extrusion or injection moulding.

**Final articles made from nucleated polypropylene compositions**

The nucleated polypropylene composition according the invention is useful for producing articles comprising the nucleated polypropylene composition, which - during their production processes - undergo extremely high cooling rates in the range of 200 K/s or even higher, such as extruded films, preferably produced via cast film extrusion, blown films, especially those produced via water-quenched blown film-technology, or steel belt technology (also called "sleeve touch technology".

It is further beneficial to use the process described herein for producing coatings comprising the nucleated polypropylene composition according the invention on various substrates, e.g. metal sheets , metal cables, metal wires or films, where such high cooling rates as described herein can be applied.

The $\alpha$-nucleated polypropylene composition according the invention is further useful for producing articles, which - once available in their final form - undergo thermal treatment above 60 °C, as e.g. in sterilisation, steam-sterilisation or pasteurisation processes. Examples for such articles are e.g. protective packaging for medical and/or health-care-related articles, or packaging for food wrapping, or the like.

With extruded film applications, the films may be oriented in one or more directions, wherein both options are equally preferred.

In respect of extruded articles, such as films or coatings, it is preferred, that the thickness of said films or coatings is in the range for at least 1 $\mu$m to about 150 $\mu$m, more preferably in the range of at least 5 $\mu$m or 8 $\mu$m to about to about 130 $\mu$m, like e.g. 10 $\mu$m to 120 $\mu$m, more preferably in the range of about 15 $\mu$m to about 100 $\mu$m, like e.g. 18 $\mu$m to about 80 $\mu$m or 20 to 65 $\mu$m, like 24 to 50 $\mu$m or 30 to 45 $\mu$m.

In respect of coatings it is especially preferred, that the thickness of said coating is in the range of at least 1 $\mu$m to about 30 $\mu$m, like 3 $\mu$m to 25 $\mu$m, preferably 5$\mu$m to 20 $\mu$m, like 7 $\mu$m to 18 $\mu$m, more preferably 9 to 15 $\mu$m.

The extruded articles may comprise one layer, though they may also comprise further layers, wherein the $\alpha$-nucleated polypropylene of the present invention may be comprised by any of the layers.

In case of fibres comprising the nucleated polypropylene of the present invention, the fibres may have a diameter of at least 0,5 $\mu$m up to 50 $\mu$m, preferably 1,0 $\mu$m to 20 $\mu$m.

In case of nonwovens it is preferred, that the nonwovens have an area weight of the web of 1 to 250 g/m$^2$, preferably 3 - 150 g/m$^2$.

The present invention will now be described in further detail by the examples provided below:

**Examples**

**Measuring methods**

The following definitions of terms and determination methods apply for the above general description of the invention including the claims as well as to the below examples unless otherwise defined.

**Differential scanning calorimetry (DSC) analysis, melting temperature ($T_m$) and melt enthalpy ($H_m$), crystallization temperature ($T_c$), and heat of crystallization ($H_c$, $H_{CR}$):**
measured with a TA Instrument Q200 differential scanning calorimetry (DSC) on 5 to 7 mg samples. DSC is run according to ISO 11357 / part 3 /method C2 in a heat / cool / heat cycle with a scan rate of 10 °C/min in the temperature range of -30 to +225°C. Crystallization temperature ($T_c$) and heat of crystallization ($H_c$) are determined from the cooling step, while melting temperature ($T_m$) and melt enthalpy (Hm) are determined from the second heating step.

Throughout the patent the term Tc or (Tcr) is understood as Peak temperature of crystallization as determined by DSC at a cooling rate of 10 K/min.

**Solidification Temperature ($Ts_{CR}$)**

Solidification Temperature ($Ts_{CR}$) defines the Crystallisation Temperature at a given cooling rate of e.g. 100 K/sec.

Due to the high cooling rate it is determined in FSC. E.g.: $Ts_{400}$ defines the solidification temperature at a cooling rate of 400 K/sec.

Analogously $Ts_{0,16}$ would hence correspond to the Peak temperature of crystallization as mentioned above.

Further a term "high cooling rate" is to be understood as "fast cooling", e.g. a cooling rate of e.g. 400 K/sec provides faster cooling than a cooling rate of e.g. 100 K/sec.

**Heat of crystallization (H$_c$, H$_{cr}$)**

Heat of crystallization (Hc) was determined during the various cooling steps at the indicated cooling rates. With cooling rates up to 0,5 K/s the measurement was done in DSC (cf. above), at cooling rates of 1 K/s or higher the measurement was done in FSC (cf. below).

**Fast scanning calorimetry (FSC)**

A power-compensation-type differential scanning calorimeter Flash DSC1 from Mettler-Toledo was used to analyze isothermally and non-isothermally the crystallization behavior in the range of cooling rates from $10^0$ to $10^3$ K s$^{-1}$. The instrument was attached to a Huber intracooler TC45, to allow cooling down to about -100 °C. The preparation of samples includes cutting of thin sections with thickness of 10 to 15 $\mu$m from the surface of pellets. The specimens were heated to 200 °C, kept at this temperature for 0.1 s and cooled at different cooling rates to -33 °C which is below the glass transition temperature of the mobile amorphous fraction of iPP. The furnace of the instrument was purged with dry nitrogen gas at a flow rate of 30 mL min$^{-1}$. The sensors were subjected to the so called conditioning procedure which includes several heating and cooling runs. Afterwards, a temperaturecorrection of the sensor was performed
Before loading the sample a thin layer of silicon oil was spread on the heating area of the sample sensor to improve the thermal contact between the sensor and the sample. The sensors are developed by Xensor Integration (Netherlands). Each sensor is supported by a ceramic base plate for easy handling. The total area of the chip is 5.0×3.3 mm$^2$; it contains two separate silicon nitride/oxide membranes with an area of 1.7x1.7 mm$^2$ and a thickness of 2.1 mm each, being surrounded by a silicon frame of 300 $\mu$m thickness, serving as a heat sink. In the present work additional calibrations were not performed. Further details to the technique as such are given here:

E. Iervolino, A. van Herwaarden, F. van Herwaarden, E. van de Kerkhof, P. van Grinsven, A. Leenaers, V. Mathot, P. Sarro. Temperature calibration and electrical characterization of the differential scanning calorimeter chip UFS1 for the Mettler-Toledo Flash DSC 1. Thermochim. Acta 522, 53-59 (2011).
V. Mathot, M. Pyda, T. Pijpers, G. Poel, E. van de Kerkhof, S. van Herwaarden, F. van Herwaarden, A. Leenaers. The Flash DSC 1, a power compensation twin-type, chip-based fast scanning calorimeter (FSC): First findings of polymers. Thermochim. Acta 552, 36-45 (2011).
M. van Drongelen, T. Meijer-Vissers, D. Cavallo, G. Portale, G. Vanden Poel, R. Androsch R. Microfocus wide-angle X-ray scattering of polymers crystallized in a fast scanning chip calorimeter. Thermochim Acta 563, 33-37 (2013).

**DSC-REact parameter: (Quenching resistance)**

The quenching resistance was evaluated with a phenomenological dimensionless parameter "REact" often related to activation energy,Eact, for various phenomena. This approach was first described by H.E. Kissinger in Journal of Research of the National Bureau of Standards 1956, volume 57, issue 4, page 217, equation 7, for the differential thermal analysis of kaolinite clays, and afterwards used also for polymer crystallization.

$$"REact" = -R^{-1}E_{act} = d\left[ln\left(\frac{T'}{T_{cr}^2}\right)\right] \Big/ d\left(\frac{1}{T_{cr}}\right)$$

where T' is the cooling rate from the melt, Tcr is the crystallization temperature, R is the gas constant. This "REact" parameter was found to correlate well with the crystallization temperature at cooling rates in the order of 30 °C/s, from DSC plots of crystallization temperature vs. cooling rate, as well as with the $\alpha$ phase crystalline content of cables as measured with the deconvolution of Wide Angle X-Ray Scattering patterns.
The materials were pressed into films and circular samples were punched out of the films with weight of ca. 2 mg. DSC runs were performed with heating rate of 20 °C/min to the temperature of 210 °C which was kept constant for 10 minutes. The samples were then cooled with different cooling rates 0,05 ;0,16; 0,5 and 1,6 K/Sec and the crystallization temperature at each cooling rate was recorded.

**FSC-REact**

The standard proceeding of REact as above was followed, except that the following cooling rates were applied:

FSC(100-300)-Re-act: cooling rates of 100 K/s, 200 K/s and 300 K/s.

FSC (400-1000)-Re-act: cooling rates of 400 K/s, 500 K/s and 800 K/s. and 1000 K/s.

The FSC-React parameter can only be determined with materials which show monoclinic crystallisation at all the given cooling rates.

The samples were then cooled with the cooling rates as defined above and the crystallization temperature at each cooling rate was recorded. The quenching resistance was evaluated based on the formula given in RE-act above.

The according results are given in tables 1, table 3 and table 6.

Materials, that did not form monoclinic phase but only mesomorph or remained amorphous at the given cooling rates, are indicated by "non-monoclinic crystallisation" or "NMC".

## Quantification of microstructure by NMR spectroscopy

Quantitative nuclear-magnetic resonance (NMR) spectroscopy was used to quantify the isotacticity and regio-regularity of the propylene homopolymers.

Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimised 10 mm extended temperature probehead at 125°C using nitrogen gas for all pneumatics.

For propylene homopolymers approximately 200 mg of material was dissolved in 1,2-tetrachloroethane-$d_2$ (TCE-$d_2$). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution needed for tacticity distribution quantification (Busico, V., Cipullo, R., Prog. Polym. Sci. 26 (2001) 443; Busico, V.; Cipullo, R., Monaco, G., Vacatello, M., Segre, A.L., Macromolecules 30 (1997) 6251). Standard single-pulse excitation was employed utilising the NOE and bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 8192 (8k) transients were acquired per spectra.

Quantitative $^{13}C\{^1H\}$ NMR spectra were processed, integrated and relevant quantitative properties determined from the integrals using proprietary computer programs.

For propylene homopolymers all chemical shifts are internally referenced to the methyl isotactic pentad (mmmm) at 21.85 ppm.

Characteristic signals corresponding to regio defects (Resconi, L., Cavallo, L., Fait, A., Piemontesi, F., Chem. Rev. 2000, 100, 1253;; Wang, W-J., Zhu, S., Macromolecules 33 (2000), 1157; Cheng, H. N., Macromolecules 17 (1984), 1950) or comonomer were observed.

The tacticity distribution was quantified through integration of the methyl region between 23.6-19.7 ppm correcting for any sites not related to the stereo sequences of interest(Busico, V., Cipullo, R., Prog. Polym. Sci. 26 (2001) 443; Busico, V., Cipullo, R., Monaco, G., Vacatello, M., Segre, A.L., Macromolecules 30 (1997) 6251).

Specifically the influence of regio-defects and comonomer on the quantification of the tacticity distribution was corrected for by subtraction of representative regio-defect and comonomer integrals from the specific integral regions of the stereo sequences.

The isotacticity was determined at the pentad level and reported as the percentage of isotactic pentad (mmmm) sequences with respect to all pentad sequences:

$$[mmmm] \% = 100 * (mmmm \text{ / sum of all pentads})$$

The presence of 2,1 erythro regio-defects was indicated by the presence of the two methyl sites at 17.7 and 17.2 ppm and confirmed by other characteristic sites. Characteristic signals corresponding to other types of regio-defects were not observed (Resconi, L., Cavallo, L., Fait, A., Piemontesi, F., Chem. Rev. 2000, 100, 1253).

The amount of 2,1 erythro regio-defects was quantified using the average integral of the two characteristic methyl sites at 17.7 and 17.2 ppm:

$$P_{21e} = (I_{e6} + I_{e8}) / 2$$

The amount of 1,2 primary inserted propene was quantified based on the methyl region with correction undertaken for sites included in this region not related to primary insertion and for primary insertion sites excluded from this region:

$$P_{12} = I_{CH3} + P_{12e}$$

The total amount of propene was quantified as the sum of primary inserted propene and all other present regio-defects:

$$P_{total} = P_{12} + P_{21e}$$

The mole percent of 2,1 erythro regio-defects was quantified with respect to all propene:

$$[21e]\ mol.-\% = 100 * (P_{21e} / P_{total})$$

**MFR$_2$ (230 °C)** is measured according to ISO 1133 (230 °C, 2.16 kg load)

**ICP Analysis (Al, Mg, Ti)**

The elemental analysis of a catalyst was performed by taking a solid sample of mass, M, cooling over dry ice. Samples were diluted up to a known volume, V, by dissolving in nitric acid (HNO$_3$, 65 %, 5 % of V) and freshly de-ionized (DI) water (5 % of V). The solution was further diluted with DI water up to the final volume, V, and left to stabilize for two hours.

The analysis was run at room temperature using a Thermo Elemental iCAP 6300 Inductively Coupled Plasma - Optical Emission Spectrometer (ICP-OES) which was calibrated using a blank (a solution of 5 % HNO$_3$), and standards of 0.5 ppm, 1 ppm, 10 ppm, 50 ppm, 100 ppm and 300 ppm of Al, Mg and Ti in solutions of 5 % HNO$_3$.

Immediately before analysis the calibration is 'resloped' using the blank and 100 ppm standard, a quality control sample (20 ppm Al, Mg and Ti in a solution of 5 % HNO$_3$ in DI water) is run to confirm the reslope. The QC sample is also run after every 5th sample and at the end of a scheduled analysis set.

The content of Mg was monitored using the 285.213 nm line and the content for Ti using 336.121 nm line. The content of aluminium was monitored via the 167.079 nm line, when Al concentration in ICP sample was between 0-10 ppm (calibrated only to 100 ppm) and via the 396.152 nm line for Al concentrations above 10 ppm.

The reported values are an average of three successive aliquots taken from the same sample and are related back to the original catalyst by inputting the original mass of sample and the dilution volume into the software.

The amount of **residual VCH** in the catalyst/oil mixture was analysed with a gas chromatograph. Toluene was used as internal standard.

**Sample preparation**

Inventive Example 1

1a) Catalyst preparation

3,4 litre of 2-ethylhexanol and 810 ml of propylene glycol butyl monoether ( in a molar ratio 4/1) were added to a 20 l reactor. Then 7,8 litre of a 20 % solution in toluene of BEM (butyl ethyl magnesium) provided by Crompton GmbH were slowly added to the well stirred alcohol mixture. During the addition the temperature was kept at 10 °C. After addition the temperature of the reaction mixture was raised to 60 °C and mixing was continued at this temperature for 30 minutes. Finally after cooling to room temperature the obtained Mgalkoxide was transferred to storage vessel.

21,2 g of Mg alkoxide prepared above was mixed with 4,0 ml bis(2-ethylhexyl) citraconate for 5 min. After mixing the obtained Mg complex was used immediately in the preparation of catalyst component.

19,5 ml titanium tetrachloride was placed in a 300 ml reactor equipped with a mechanical stirrer at 25°C. Mixing speed was adjusted to 170 rpm. 26,0 of Mg-complex prepared above was added within 30 minutes keeping the temperature at 25 °C . 3,0 ml of Viscoplex 1-254 and 1,0 ml of a toluene solution with 2 mg Necadd 447 was added. Then 24,0 ml of heptane was added to form an emulsion. Mixing was continued for 30 minutes at 25 °C. Then the reactor temperature was raised to 90°C within 30 minutes. The reaction mixture was stirred for further 30 minutes at 90°C. Afterwards stirring was stopped and the reaction mixture was allowed to settle for 15 minutes at 90°C.

The solid material was washed 5 times: Washings were made at 80 °C under stirring 30 min with 170 rpm. After stirring was stopped the reaction mixture was allowed to settle for 20-30 minutes and followed by siphoning.

Wash 1: Washing was made with a mixture of 100 ml of toluene and 1 ml donor

Wash 2: Washing was made with a mixture of 30 ml of TiCl4 and 1 ml of donor.

Wash 3: Washing was made with 100 ml toluene.

Wash 4: Washing was made with 60 ml of heptane.

Wash 5. Washing was made with 60 ml of heptane under 10 minutes stirring.

Afterwards stirring was stopped and the reaction mixture was allowed to settle for 10 minutes decreasing the temperature to 70°C with subsequent siphoning, and followed by $N_2$ sparging for 20 minutes to yield an air sensitive powder.

1b) VCH modification of the catalyst

35 ml of mineral oil (Paraffinum Liquidum PL68) was added to a 125 ml stainless steel reactor followed by 0,82 g of triethyl aluminium (TEAL) and 0,33 g of dicyclopentyl dimethoxy silane (donor D) under inert conditions at room temperature. After 10 minutes 5,0 g of the catalyst prepared in 1a (Ti content 1,4 wt%) was added and after additionally 20 minutes 5,0 g of vinylcyclohexane (VCH) was added.).The temperature was increased to 60 °C during 30 minutes and was kept there for 20 hours. Finally, the temperature was decreased to 20 °C and the concentration of unreacted VCH in the oil/catalyst mixture was analysed and was found to be 120 ppm weight.

1c) Polymerisation - Inventive Example 1

41 mg of donor D (TEAL/Donor ratio 10 mol/mol) and 206 mg of TEAL(TEAL/Ti ratio 250 mol/mol) was mixed with 30 ml of pentane. Donor to titanium was 25 mol/mol. Half of this mixture was added to the 5 litre stirred reactor and half was added to 209 mg of the oil/catalyst mixture (=124,7 mg of dry catalyst). After 10 minutes the pentane/catalyst/TEAL/donorD mixture was added to the reactor, followed by 300 mmol H2 and 1,4 kg of propylene at room temperature. The temperature was increased to 80 °C during 16 minutes and was kept at this temperature for 1 hour. Unreacted propylene was flashed out by opening the exhaust valve. The reactor was opened and the polymer powder was collected and weighed.

Basic properties of the polymer are shown in table 1.

**Inventive Example 2**

2a) catalyst preparation

First, 0.1 mol of $MgCl_2 \times$ 3 EtOH was suspended under inert conditions in 250 ml of decane in a reactor at atmospheric pressure. The solution was cooled to the temperature of -15°C and 300 ml of cold $TiCl_4$ was added while maintaining the temperature at said level. Then, the temperature of the slurry was increased slowly to 20 °C. At this temperature, 0.02 mol of dioctylphthalate (DOP) was added to the slurry. After the addition of the phthalate, the temperature was raised to 135 °C during 90 minutes and the slurry was allowed to stand for 60 minutes. Then, another 300 ml of $TiCl_4$ was added and the temperature was kept at 135 °C for 120 minutes. After this, the catalyst was filtered from the liquid and washed six times with 300 ml heptane at 80 °C. Then, the solid catalyst component was filtered and dried. Catalyst and its preparation concept is described in general e.g. in patent publications EP491566, EP591224 and EP586390.

2b) VCH modification of the catalyst

This example was done in accordance with Example 1b, but as catalyst was used a phthalate containing catalyst prepared according to example C2a).(Ti content 1,8 wt%) 52 ml of oil, 1,17 g TEAL, 0,73 g donor D were used. The reaction temperature was 65 °C with this catalyst. The concentration of unreacted VCH in the final catalyst was 200 ppm weight.

2c) Polymerisation

Polymerisation was done in accordance to example 1, but using the catalyst prepared according 2a) and 2b), 22 mg of donor D, 176 mg of TEAL and 84,4 mg of the oil/catalyst mixture was used, giving a donor to titanium ratio of 25 mol/mol. 620 mmol of hydrogen was used.

**Comparative example 1 CE1**

In this example the same catalyst as in inventive example 1 was used, but the catalyst was used as such without VCH modification of the catalyst. 43 mg of catalyst was used and the hydrogen amount was 170 mmol, but otherwise the polymerisation conditions were the same as in example 1. The results are collected in table 1.

**Comparative example 2 CE2**

This example was done in accordance with inventive example 2c with the same catalyst, but the catalyst was used as such without VCH modification. 12,6 mg of catalyst was used and the hydrogen amount was 320 mmol, but otherwise the same polymerisation conditions as in comparative example 2 was used.

1500 ppm of Millad 3988 (Bis-(3,4-dimethylbenzylidene)sorbitol) provided by Milliken were added to the polymer in a separate compounding step.

**Inventive Example 3**

Non-nucleated PP-homopolymer was produced using the same catalyst as in Inventive example 2, but omitting step 2b (VCH modification).

VCH-nucleation was then done later by compounding 3 % of IE2 into the non-nucleated polypropylene-homopolymer. Basic properties are given in table 3

**Inventive Example 4, Inventive example 5**

The neat polymer from CE1 was compounded with 1 and 3 % of IE1.

Basic properties are given in table 3

**Comparative example CE3:**

The catalyst used in the polymerization processes of the inventive example 6 was the same catalyst as for comparative example 2, along with triethyl-aluminium (TEAL) as co-catalyst and dicyclo pentyl dimethoxy silane (D-donor) as donor. The aluminium to donor ratio, the aluminium to titanium ratio and the polymerization conditions are indicated in table 1. A Borstar PP pilot plant with one loop and one gas phase reactor was used for the polymerization.

**Inventive Example 6:**

The catalyst used in the polymerization processes of the inventive example 6 was the same catalyst as for inventive example 2 (resp. 2c), along with triethyl-aluminium (TEAL) as cocatalyst and dicyclo pentyl dimethoxy silane (D-donor) as donor. The aluminium to donor ratio, the aluminium to titanium ratio and the polymerization conditions are indicated in table 5. A Borstar PP pilot plant with one loop and one gas phase reactor was used for the polymerization.

**Inventive Example 7:**

The neat polymer from comparative example CE3 was compounded with 9 wt% of the neat polymer of inventive example 2.

The compounds for the inventive examples IE 3, IE4, IE5 and IE7 were produced on a ZSK-18 twin screw extruder, at a melt temperature of 230 °C, throughput of 6kg/hr.

All the products contained a standard stabilisation consisting of 0,1 wt % Irganox B225 [1:1-blend of Irganox 1010 (Pentaerythrityl-tetrakis(3-(3',5'-di-tert.butyl-4- hydroxytoluyl)-propionate and tris (2,4-di-t-butylphenyl) phosphate) phosphite)] as phenolic antioxidant and and 0,05 wt % calcium-stearate as acid-scavenger.

IE3, IE4 and IE5 (inventive examples for Masterbatch approach) were nucleated by adding 1 or 3 wt% of IE1 or IE2, latter ones containing VCH as nucleating agent.

Whilst Tables 1 to 7 represent experiments performed on compositions that fulfil the requirements of the claims of the present invention, only those examples that involve a cooling rate of 200 K/sec or greater are inventive examples according to claim 1, whilst those having lower cooling rates do not form part of the present invention, and are present for illustrative purposes.

**Table 1: Crystallisation temperature at increasing cooling rates, in-reactor nucleation**

| Abbreviations | CE1 | CE2 | IE1 | IE2 |
|---|---|---|---|---|
| | Phthalate free, non-nucleated | | Phthalate free, with polymeric nucleating agent | |
| nucleation / ppm | none | DMDBS / 1500 | VCH / 32 | VCH / 17 |
| MFR | 20 | 4 | 16 | 15 |
| Xs [wt%] | 1,3 | 1,3 | 1,3 | 1,3 |
| DSC Tm [°C] | 166 | 167 | 167 | 167 |
| Hm [J/g] | 106 | 109 | 109 | 112 |
| DSC-RE-act | 2661 | 4778 | 5812 | 5768 |
| FSC(100-300)-RE-act | 521 | 521 | 866 | 588 |
| FSC(400-1000)-REact | NMC* | NMC* | 324 | 270 |
| Cooling rate [K/sec] | Tcr [°C] | Tcr [°C] | Tcr [°C] | Tcr [°C] |
| 0,05 | 124 | 125 | 131 | 131 |
| 0,16 | 121 | 123 | 128 | 128 |
| 0,5 | 112 | 118 | 124 | 124 |
| 1 | 103 | 108 | 117 | 110 |
| 5 | 94 | 99 | 110 | 102 |
| 10 | 90 | 95 | 106 | 99 |
| 20 | 84 | 89 | 103 | 95 |
| 40 | 78 | 85 | 99 | 90 |
| 60 | 74 | 79 | 96 | 87 |
| 80 | 70 | 75 | 94 | 84 |
| 100 | 70 | 72 | 93 | 82 |
| 200 | 70 | 62 | 86 | 74 |
| 300 | 64 | 61 | 81 | 68 |
| 400 | NMC | NMC | 76 | 64 |
| 500 | NMC | NMC | 72 | 60 |
| 800 | NMC | NMC | 62 | 51 |
| 1000 | NMC | NMC | 56 | 47 |
| 2000 | NMC | NMC | 34 | nmc |
| *NMC: non-monoclinic crystallisation | | | | |

**Table 2 Enthalpy of crystallization and degree of crystallinity at increasing cooling rates, in-reactor nucleation**

| Abbreviations | CE1 | CE2 | IE1 | IE2 |
|---|---|---|---|---|
|  | Phthalate free, non-nucleated |  | Phthalate free, with polymeric nucleating agent |  |
| nucleation / ppm | none | DMDBS / 1500 | VCH / 32 | VCH / 17 |
| *Cooling rate [K/sec]* | *Hcr (J/g)* | *Hcr (J/g)* | *Hcr (J/g)* | *Hcr (J/g)* |
| 0,05 | 94 | 95 | 103 | 102 |
| 0,16 | 90 | 91 | 105 | 102 |
| 0,5 | 88 | 87 | 102 | 102 |
| 1 | 84 | 85 | 101 | 101 |
| 5 | 70 | 71 | 96 | 91 |
| 10 | 68 | 68 | 95 | 89 |
| 20 | 67 | 67 | 95 | 89 |
| 40 | 55 | 57 | 94 | 88 |
| 60 | 50 | 53 | 93 | 86 |
| 80 | 45 | 46 | 92 | 84 |
| 100 | 34 | 42 | 89 | 81 |
| 200 | 20 | 25 | 87 | 78 |
| 300 | 15 | 18 | 86 | 66 |
| 400 | 10 | 10 | 82 | 55 |
| 500 | 5 | 5 | 79 | 40 |
| 800 | *NMC* | *NMC* | 74 | 12 |
| 1000 | *NMC* | *NMC* | 73 | 5 |
| 2000 | *NMC* | *NMC* | 10 | *NMC* |

**Table 3: Crystallisation temperature at increasing cooling rates, nucleation by compounding**

| Abbreviations | IE3 | IE4 | IE5 |
|---|---|---|---|
|  | Polymeric nucleating agent | Phthalate free, with polymeric nucleating agent | Phthalate free, with polymeric nucleating agent |
| Nucleation -MB | 3 wt% of IE2 | 1 wt% of IE1 | 3% of IE1 |
| MFI [g/10min] | 30 | 30 | 30 |
| Xs [wt%] | 1,5 | 1,5 | 1,5 |
| Hm [J/g] | 109 | 108 | 108 |
| DSC-REact | **5231** | **5560** | **5508** |
| $FSC_{(100-300)}$-RE-act | 400 | 382 | 600 |
| $FSC_{(400-1000)}$-RE-act | 255 | 271 | 300 |
| Cooling rate [K/sec] | Tcr [°C] | Tcr [°C] | Tcr [°C] |
| 0,05 | 129 | 129 | 129 |
| 0,16 | 126 | 125 | 126 |

(continued)

| Abbreviations | IE3 | IE4 | IE5 |
|---|---|---|---|
| | Polymeric nucleating aqent | Phthalate free, with polymeric nucleating agent | Phthalate free, with polymeric nucleating agent |
| Nucleation -MB | 3 wt% of IE2 | 1 wt% of IE1 | 3% of IE1 |
| 0,5 | 119 | 121 | 122 |
| 1 | 114 | 115 | 118 |
| 5 | 101 | 101 | 105 |
| 10 | 94 | 97 | 100 |
| 20 | 91 | 92 | 96 |
| 40 | 86 | 86 | 91 |
| 60 | 83 | 82 | 88 |
| 80 | 80 | 79 | 85 |
| 100 | 70 | 76 | 83 |
| 200 | 60 | 65 | 73 |
| 300 | 55 | 57 | 70 |
| 400 | 51 | 52 | 61 |
| 500 | 48 | 48 | 56 |
| 800 | 42 | 42 | 48 |
| 1000 | NMC | 41 | 44 |
| 2000 | NMC | NMC | NMC |

**Table 4 Enthalpy of crystallisation and degree of crystallinity at increasing cooling rates**

| Abbreviations | IE3 | IE4 | IE5 |
|---|---|---|---|
| | | Phthalate free, with polymeric nucleating agent | Phthalate free, with polymeric nucleating agent |
| Nucleation -MB | 3 wt% of IE2 | 1 wt% of IE1 | 3% of IE1 |
| Cooling rate [K/sec] | Hcr (J/g) | Hcr (J/g) | Hcr (J/g) |
| 0,05 | 95 | 95 | 95 |
| 0,16 | 92 | 93 | 93 |
| 0,5 | 90 | 87 | 87 |
| 1 | 85 | 86 | 87 |
| 5 | 75 | 75 | 80 |
| 10 | 71 | 71 | 77 |
| 20 | 70 | 66 | 75 |
| 40 | 59 | 64 | 71 |
| 60 | 55 | 61 | 68 |
| 80 | 49 | 57 | 68 |
| 100 | 46 | 56 | 68 |

(continued)

| Abbreviations | IE3 | IE4 | IE5 |
|---|---|---|---|
| | | **Phthalate free, with polymeric nucleating agent** | **Phthalate free, with polymeric nucleating agent** |
| Nucleation -MB | 3 wt% of IE2 | 1 wt% of IE1 | 3% of IE1 |
| *Cooling rate [K/sec]* | *Hcr (J/g)* | *Hcr (J/g)* | *Hcr (J/g)* |
| 200 | 40 | 41 | 61 |
| 300 | 28 | 30 | 59 |
| 400 | 20 | 14 | 50 |
| 500 | 10 | 10 | 42 |
| 800 | 5 | 5 | 15 |
| 1000 | NMC | NMC | 5 |
| 2000 | NMC | NMC | NMC |

**Table 5: Preparation of Random Copolymer examples**

| | | CE3 | IE6 |
|---|---|---|---|
| TEAL/Ti | [mol/mol] | 160 | 160 |
| TEAL/Donor | [mol/mol] | 4.0 | 4.0 |
| **Loop (R-PP1)** | | | |
| Time | [h] | 0.75 | 0.75 |
| Temperature | [°C] | 70 | 70 |
| MFR$_2$ | [g/10min] | 22.0 | 20.0 |
| XCS | [wt.-%] | 6.0 | 3.1 |
| C2 content | [mol-%] | 3.1 | 1.6 |
| H$_2$/C3 ratio | [mol/kmol] | 2.95 | 2.85 |
| C2/C3 ratio | [mol/kmol] | 6.30 | 3.12 |
| amount | [wt.-%] | 53 | 52 |
| **1 GPR (R-PP2)** | | | |
| Time | [h] | 2.00 | 2.00 |
| Temperature | [°C] | 80 | 80 |
| MFR$_2$ | [g/10min] | 20.0 | 20.0 |
| C2 content | [mol-%] | 3.1 | 4.1 |
| H$_2$/C3 ratio | [mol/kmol] | 30.8 | 25.6 |
| C2/C3 ratio | [mol/kmol] | 18.0 | 17.6 |
| amount | [wt.-%] | 47 | 48 |
| **Final** | | | |
| MFR$_2$ | [g/10min] | 20.0 | 20.0 |
| C2 content | [mol-%] | 3.1 | 2.9 |

(continued)

| Final | | | |
|---|---|---|---|
| XCS | [wt.-%] | 6.0 | 4.9 |

**Table 6 Crystallisation and Solidification Temperature of PP-random-copolymers**

| | CE3 | IE6 | IE7 |
|---|---|---|---|
| Nucleation | 0 | 14 ppm VCH Inreactor nucleation | 9 % of IE2 |
| MFI [g/10 min] | 20 | 5 | 20 |
| Xs [wt%] | 6 | 5 | 6 |
| Hm [J/g] | 80 | 101 | 86 |
| DSC-React | 3948 | 4889 | 4081 |
| FSC-React (100-300 K/s) | - | 700 | 250 |
| FSC-React (400-1000 K/s) | - | 280 | - |
| Cooling rate [K/s] | Tcr | Tcr | Tcr |
| 0,05 | 125 | 125 | 124 |
| 0,16 | 120 | 123 | 120 |
| 0,5 | 115 | 118 | 115 |
| 1 | 106 | 111 | 107 |
| 5 | 91 | 105 | 95 |
| 10 | 83 | 102 | 90 |
| 20 | 75 | 98 | 85 |
| 40 | 67 | 94 | 78 |
| 60 | 66 | 91 | 74 |
| 80 | 60 | 89 | 71 |
| 100 | 60 | 87 | 67 |
| 200 | NMC | 80 | 56 |
| 300 | NMC | 74 | 50 |
| 400 | NMC | 70 | 47 |
| 500 | NMC | 66 | 46 |
| 800 | NMC | 56 | NMC |
| 1000 | NMC | 51 | NMC |
| 2000 | NMC | 35 | NMC |

**Table 7 Enthalpy of crystallization and degree of crystallinity at increasing cooling rates of nucleated polypropylene random copolymers**

| Abbreviations | CE3 | IE6 | IE7 |
|---|---|---|---|
| Cooling rate [K/sec] | Hcr (J/q) | Hcr (J/g) | Hcr (J/g) |
| 0,05 | 85 | 97 | 92 |
| 0,16 | 82 | 95 | 92 |

(continued)

| Abbreviations | CE3 | IE6 | IE7 |
|---|---|---|---|
| *Cooling rate [K/sec]* | *Hcr (J/q)* | *Hcr (J/g)* | *Hcr (J/g)* |
| 0,5 | 80 | 87 | 82 |
| 1 | 73 | 79 | 77 |
| 5 | 69 | 76 | 76 |
| 10 | 67 | 75 | 75 |
| 20 | 61 | 73 | 70 |
| 40 | 58 | 70 | 69 |
| 60 | 48 | 67 | 60 |
| 80 | 39 | 67 | 60 |
| 100 | 10 | 64 | 60 |
| 200 | NMC | 63 | 45 |
| 300 | NMC | 56 | 22 |
| 400 | NMC | 53 | 13 |
| 500 | NMC | 52 | 5 |
| 800 | NMC | 47 | NMC |
| 1000 | NMC | 35 | NMC |
| 2000 | NMC | 5 | NMC |

Description of the diagrams:

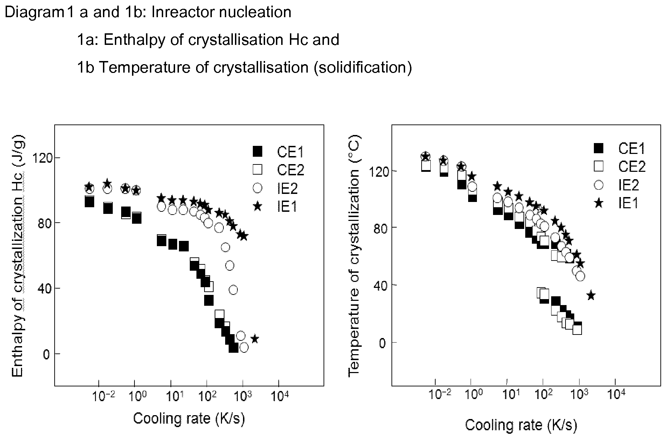

Diagram 1 a and 1b show Crystallisation (solidification) behaviour of inreactor nucleated $\alpha$-nucleated polypropylene

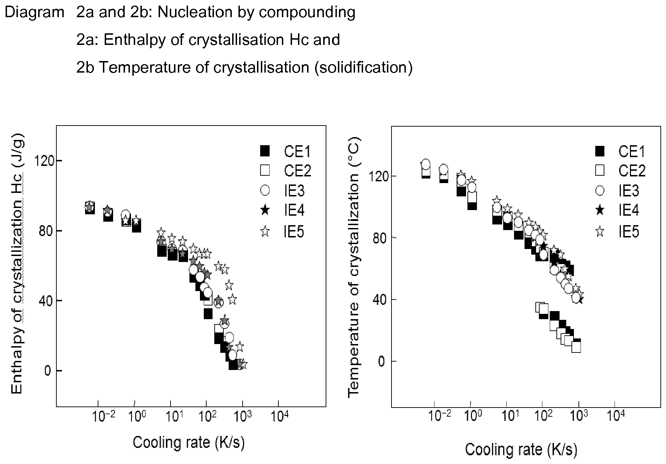

Diagram 2 a and 2b show Crystallisation (solidification) behaviour of masterbatch-(compound-) nucleated $\alpha$-nucleated polypropylene

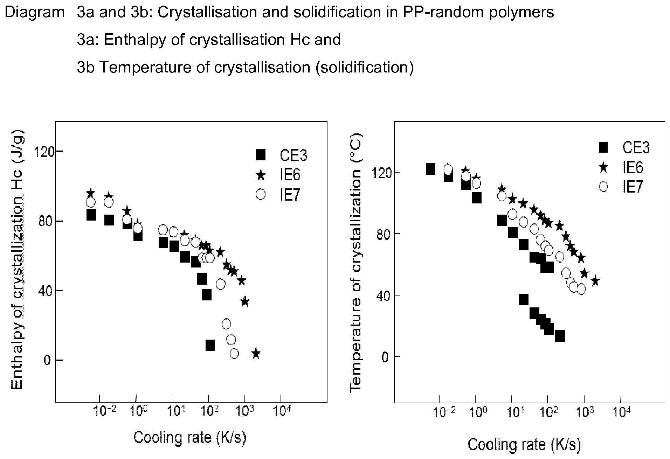

Diagram 3 aand 3b show Crystallisation (solidification) behaviour of $\alpha$-nucleated polypropylene-random copolymers, both inreactor- and masterbatch- (compound-) nucleated version.

**Claims**

1. Process for the preparation of an $\alpha$-nucleated polypropylene composition, comprising the steps of

a) forming a polypropylene composition comprising a polymeric nucleating agent, said polypropylene composition having a melt flow rate $MFR_2$ measured in accordance with ISO 1133 (230 °C, 2.16 kg) in the range of 0.1 to 500 g/10 min, a pentad regularity determined by $^{13}$C-NMR spectroscopy of at least 95.0 mol-%, a solidification temperature $Ts_{400}$ of at least 50 °C and a heat of crystallization (Hc) at a cooling rate of 200 K/s of at least 30 J/g,
b) heating the polypropylene composition obtained in step a) to a melt temperature of at least 200 °C
c) exposing the melt obtained in step b) to a cooling rate of 200 K/sec or more.

2. Process according to claim 1, wherein the polymeric nucleating agent is a polymer vinyl cycloalkane, preferably a polymer of vinyl cyclo hexane.

3. Process according to any of the preceding claims wherein step b) comprises

b1) heating the polypropylene composition obtained in step a) to a melt temperature of at least 200 °C and
b2) forming said polypropylene composition into a molten film.

4. Nucleated polypropylene compositions, produced according to any of the preceding claims, wherein the nucleated polypropylene has a solidification temperature $Ts_{2000}$ of 30°C or above.

5. Nucleated polypropylene compositions, produced according to any of claims 1 to 3, wherein the nucleated polypropylene has a FSC(400-1000)-RE-act of at least 200.

6. Use of $\alpha$-nucleated polypropylene composition according to any of the preceding claims for the manufacture of films.

7. Articles comprising the nucleated polypropylene composition according to either of claims 4 or 5.

8. Articles according to claim 7, wherein the article is a cast or blown film or a coating.

9. Articles according to any of the preceding claims 7 and 8, wherein the article is an oriented or non-oriented monolayer or multilayer film.

10. Articles produced according to claim 1, wherein the nucleated polypropylene contains solely a polymeric nucleating agent.

11. Films produced according to the process of any one of claims 1 to 3, wherein the films have a thickness of 5 - 150 $\mu$m.

12. Films produced according to any one of claims 1 to 3, wherein the films are further exposed to a sterilisation or pasteurisation step at temperatures of at least 70 °C.

**Patentansprüche**

1. Verfahren zur Herstellung einer $\alpha$-nukleierten Polypropylenzusammensetzung, umfassend die Schritte

   a) Bilden einer Polypropylenzusammensetzung, umfassend ein polymeres Nukleierungsmittel, wobei die Polypropylenzusammensetzung eine Schmelzefliessrate $MFR_2$, gemessen gemäß ISO 1133 (230°C, 2,16 kg), im Bereich von 0,1 bis 500 g/10 min, eine durch $^{13}$C-NMR-Spektroskopie bestimmte Pentadenregelmäßigkeit von mindestens 95,0 Mol-%, eine Erstarrungstemperatur $Ts_{400}$ von mindestens 50°C und eine Kristallisationswärme (Hc) bei einer Abkühlungsrate von 200 K/s von mindestens 30 J/g aufweist,
   b) Erhitzen der in Schritt a) erhaltenen Polypropylenzusammensetzung auf eine Schmelztemperatur von mindestens 200°C
   c) Aussetzen der in Schritt b) erhaltenen Schmelze einer Abkühlungsrate von 200 K/s oder mehr.

2. Verfahren nach Anspruch 1, wobei das polymere Nukleierungsmittel ein polymeres Vinylcycloalkan, vorzugsweise ein Polymer von Vinylcyclohexan, ist.

3. Verfahren nach einem der vorangehenden Ansprüche, wobei Schritt b) umfasst

   b1) Erhitzen der in Schritt a) erhaltenen Polypropylenzusammensetzung auf eine Schmelztemperatur von mindestens 200°C und
   b2) Formen der Polypropylenzusammensetzung zu einer Schmelzfolie.

4. Nukleierte Polypropylenzusammensetzungen, hergestellt nach einem der vorangehenden Ansprüche, wobei das nukleierte Polypropylen eine Erstarrungstemperatur $Ts_{2000}$ von 30°C oder mehr aufweist.

5. Nukleierte Polypropylenzusammensetzungen, hergestellt nach einem der Ansprüche 1 bis 3, wobei das nukleierte Polypropylen einen FSC(400-1000)-RE-act von mindestens 200 aufweist.

6. Verwendung einer $\alpha$-nukleierten Polypropylenzusammensetzung nach einem der vorangehenden Ansprüche zur Herstellung von Folien.

7. Gegenstände, umfassend die nukleierte Polypropylenzusammensetzung nach einem der Ansprüche 4 oder 5.

8. Gegenstände nach Anspruch 7, wobei der Gegenstand eine Gieß- oder Blasfolie oder eine Beschichtung ist.

**9.** Gegenstände nach einem der vorangehenden Ansprüche 7 und 8, wobei der Gegenstand eine verstreckte oder unverstreckte Einschicht- oder Mehrschichtfolie ist.

**10.** Gegenstände, hergestellt nach Anspruch 1, wobei das nukleierte Polypropylen ausschließlich ein polymeres Nukleierungsmittel enthält.

**11.** Folien, hergestellt gemäß dem Verfahren nach einem der Ansprüche 1 bis 3, wobei die Folien eine Dicke von 5 - 150 $\mu$m aufweisen.

**12.** Folien, hergestellt nach einem der Ansprüche 1 bis 3, wobei die Folien zusätzlich einem Sterilisierungs- oder Pasteurisierungsschritt bei Temperaturen von mindestens 70°C unterzogen werden.

**Revendications**

**1.** Procédé pour la préparation d'une composition de polypropylène $\alpha$-nucléé, comprenant les étapes de

a) formation d'une composition de polypropylène comprenant un agent de nucléation polymérique, ladite composition de polypropylène ayant un indice de fluage $MFR_2$, mesuré conformément à la norme ISO 1133 (230°C, 2,16 kg), dans la plage de 0,1 à 500 g/10 min, une régularité de pentade, déterminée par spectroscopie RMN-$^{13}$C, d'au moins 95,0 % en moles, une température de solidification $TS_{400}$ d'au moins 50°C et une chaleur de cristallisation (Hc) d'au moins 30 J/g à une vitesse de refroidissement de 200 K/s,
b) chauffage de la composition de polypropylène obtenue dans l'étape a) jusqu'à une température de masse fondue d'au moins 200°C,
c) exposition de la masse fondue dans l'étape b) à une vitesse de refroidissement de 200 K/s ou plus.

**2.** Procédé selon la revendication 1, dans lequel l'agent de nucléation polymérique est un vinylcycloalcane polymère, de préférence un polymère de vinylcyclohexane.

**3.** Procédé selon l'une quelconque des revendications précédentes, dans lequel l'étape b) comprend

b1) le chauffage de la composition de polypropylène obtenue dans l'étape a) jusqu'à une température de masse fondue d'au moins 200°C et
b2) la mise de ladite composition de polypropylène sous la forme d'un film fondu.

**4.** Compositions de polypropylène nucléé, produites conformément à l'une quelconque des revendications précédentes, dans lesquelles le polypropylène nucléé a une température de solidification $Ts_{2000}$ de 30°C ou plus.

**5.** Compositions de polypropylène nucléé, produites conformément à l'une quelconque des revendications 1 à 3, dans lesquelles le polypropylène nucléé a une valeur FSC(400-1000)-RE-act d'au moins 200.

**6.** Utilisation d'une composition de polypropylène $\alpha$-nucléé selon l'une quelconque des revendications précédentes, pour la fabrication de films.

**7.** Articles comprenant la composition de polypropylène $\alpha$-nucléé selon l'une quelconque des revendications 4 et 5.

**8.** Articles selon la revendication 7, dans lesquels l'article est un film coulé ou soufflé ou un revêtement.

**9.** Articles selon l'une quelconque des revendications 7 et 8, dans lesquels l'article est un film monocouche ou multicouche orienté ou non orienté.

**10.** Articles produits conformément à la revendication 1, dans lesquels le polypropylène nucléé contient uniquement un agent de nucléation polymérique.

**11.** Films produits conformément au procédé de l'une quelconque des revendications 1 à 3, dans lesquels les films ont une épaisseur de 5 à 150 $\mu$m.

**12.** Films produits conformément à l'une quelconque des revendications 1 à 3, dans lesquels les films sont en outre exposés à une étape de stérilisation ou de pasteurisation à des températures d'au moins 70°C.

Diagram 1 a and 1b: Inreactor nucleation

  1a: Enthalpy of crystallisation Hc and

  1b Temperature of crystallisation (solidification)

Diagram 2a and 2b: Nucleation by compounding

2a: Enthalpy of crystallisation Hc and

2b Temperature of crystallisation (solidification)

Diagram   3a and 3b: Crystallisation and solidification in PP-random polymers

3a: Enthalpy of crystallisation Hc and

3b Temperature of crystallisation (solidification)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1514893 A1
- WO 9924478 A
- WO 9924479 A
- EP 0316187 A2
- WO 2004055101 A
- EP 2371517 A1
- EP 0887379 A
- WO 9212182 A
- WO 2004000899 A
- WO 2004111095 A
- WO 0068315 A
- US 5234879 A

- WO 9219653 A
- WO 9219658 A
- WO 9933843 A
- WO 2012007430 A
- EP 2610271 A
- EP 2610270 A
- EP 2610272 A
- WO 006831 A
- EP 491566 A
- EP 591224 A
- EP 586390 A

### Non-patent literature cited in the description

- Plastics Extrusion Technology. Hanser Publishers, 1997
- DE SANTIS, F. ; ADAMOVSKY, S. ; TITOMANLIO, G. ; SCHICK, C. Scanning nanocalorimetry at high cooling rate of isotactic polypropylene. *Macromolecules,* 2006, vol. 39, 2562-2567
- S. PICCAROLO. Morphological changes in isotactic polypropylene as a function of cooling rate. *J. Macromol. Sci., Phys.,* 1992, vol. B31, 501-505
- Crystallization behaviour at high cooling rates of two polypropylenes. S. PICCAROLO ; S. ALESSI ; V. BRUCATO ; G. TITOMANLIO. Crystallization of polymers. Kluwer, 1993, 475-480
- K. RESCH ; G. WALLNER ; C. TEIHCERT ; G. MAEIR ; M. GAHLEITNER. Optical properties of highly transparent polypropylene cast films: Influence of material structure, additives and processing conditions. *Polymer Engineering and Science,* 2006, vol. 46, 520-531
- T. MEIJER-VISSERS ; H. GOOSSENS. The Influence of the Cooling Rate on the Nucleation Efficiency of Isotactic Poly(propylene) with Bis(3,4-dimethylbenzylidene)sorbitol. *Macromol. Symp.,* 2013, vol. 330, 150-165
- ZIA, Q. ; RADUSCH, H.J. ; ANDROSCH, R. Deformation behaviour of isotactic polypropylene crystallized via a mesophase. *Polym. Bull.,* 2009, vol. 63, 755-771

- E. LERVOLINO ; A. VAN HERWAARDEN ; F. VAN HERWAARDEN ; E. VAN DE KERKHOF ; P. VAN GRINSVEN ; A. LEENAERS ; V. MATHOT ; P. SAR-RO. Temperature calibration and electrical characterization of the differential scanning calorimeter chip UFS1 for the Mettler-Toledo Flash DSC 1. *Thermochim. Acta,* 2011, vol. 522, 53-59
- V. MATHOT ; M. PYDA ; T. PIJPERS ; G. POEL ; E. VAN DE KERKHOF ; S. VAN HERWAARDEN ; F. VAN HERWAARDEN ; A. LEENAERS. The Flash DSC 1, a power compensation twin-type, chip-based fast scanning calorimeter (FSC): First findings of polymers. *Thermochim. Acta,* 2011, vol. 552, 36-45
- M. VAN DRONGELEN ; T. MEIJER-VISSERS ; D. CAVALLO ; G. PORTALE ; G. VANDEN POEL ; R. ANDROSCH R. Microfocus wide-angle X-ray scattering of polymers crystallized in a fast scanning chip calorimeter. *Thermochim Acta,* 2013, vol. 563, 33-37
- H.E. KISSINGER. *Journal of Research of the National Bureau of Standards,* 1956, vol. 57 (4), 217
- BUSICO, V. ; CIPULLO, R. *Prog. Polym. Sci.,* 2001, vol. 26, 443
- BUSICO, V. ; CIPULLO, R. ; MONACO, G. ; VACATELLO, M. ; SEGRE, A.L. *Macromolecules,* 1997, vol. 30, 6251
- ZHOU, Z. ; KUEMMERLE, R. ; QIU, X. ; REDWINE, D. ; CONG, R. ; TAHA, A. ; BAUGH, D. ; WINNIFORD, B. *J. Mag. Reson.,* 2007, vol. 187, 225

- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 11289
- **RESCONI, L. ; CAVALLO, L. ; FAIT, A. ; PIEMONTESI, F.** *Chem. Rev.,* 2000, vol. 100, 1253
- **WANG, W-J. ; ZHU, S.** *Macromolecules,* 2000, vol. 33, 1157
- **CHENG, H. N.** *Macromolecules,* 1984, vol. 17, 1950